# EUROPEAN PATENT APPLICATION

(11) **EP 2 000 684 A2**
(43) Date of publication of application: **10.12.2008**
(21) Application number: 07739877.4
(22) Date of filing: 27.03.2007
(51) Int. Cl.: F16C 19/55, F01D 25/16, F02B 39/00, F16C 19/18, F16C 33/58

(54) **ROLLING BEARING AND SUPERCHARGER USING THE SAME**

(30) Priority: 28.03.2006 JP 2006087300; 28.09.2006 JP 2006265678
(71) Applicant: JTEKT Corporation, Osaka-shi Osaka 542-8502 (JP)
(72) Inventor: UENO, Hiroshi, Osaka-shi Osaka 542-8502 (JP); SHIRAKI, Toshihiko, Osaka-shi Osaka 542-8502 (JP); OSHIMA, Akio, Osaka-shi Osaka 542-8502 (JP); ABE, Masaki, Osaka-shi Osaka 542-8502 (JP); OHTSUKI, Masaaki, Osaka-shi Osaka 542-8502 (JP); NAKATA, Ryuuji, Osaka-shi Osaka 542-8502 (JP); BANDO, Shigenori, Osaka-shi Osaka 542-8502 (JP); NAKASHITA, Tomonori, Osaka-shi Osaka 542-8502 (JP); KIDA, Takehisa, Osaka-shi Osaka 542-8502 (JP); INOUE, Tetsuro, Osaka-shi Osaka 542-8502 (JP)
(74) Representative: Schaeberle, Steffen
(86) International application number: PCT/JP2007/056439
(87) International publication number: WO 2007/116753

(57) **Abstract**

There are provided an inner ring having a first raceway at an outer periphery thereof, an outer ring having a second raceway at an inner periphery thereof, an intermediate ring which is interposed between these, and has a third raceway at an inner periphery thereof and also has a fourth raceway at an outer periphery thereof, first rolling elements interposed between the first raceway and the third raceway, and second rolling elements interposed between the fourth raceway and the second raceway. The intermediate ring includes a larger-diameter ring portion, and a smaller-diameter ring portion formed on the larger-diameter ring portion through an inclined ring portion. The third raceway is formed at a boundary portion between the larger-diameter ring portion and the inclined ring portion, and the fourth raceway is formed at a boundary portion between the smaller-diameter ring portion and the inclined ring portion.

## Description

### TECHNICAL FIELD

This invention relates to a rolling bearing and a supercharger using the same-.

### BACKGROUND ART

Turbochargers have been extensively used in automobiles since they can further enhance the performance of an engine. The turbocharger includes a housing, and a turbine shaft supported within the housing through bearings, and conventionally the bearings were slide bearings as shown, for example, in Patent Literature 1. However, in order to improve rotation characteristics such as a poor response due to a turbo-lag inherent to the turbocharger, there has been proposed a structure in which rolling bearings are used as bearings supporting the turbine shaft, as shown in Patent Literature 2.

In a rolling bearing, an upper limit value of the number of revolutions is determined, for example, on the basis of a lubricating condition and others, and it is used below its upper limit value.
The turbine shaft of the above turbocharger is rotated at a high rotational speed, for example, of 100,000 to 200, 000 rpm. Therefore, rolling bearings of a conventional structure can not sufficiently meet this high-speed rotation, and therefore it may be proposed, for example, to reduce the viscosity of lubricating oil or to form rolling elements (balls) by a ceramics material.
Also, there is a rolling bearing in which in order to enable high-speed rotation of the rolling bearing, rolling elements are arranged in two stages in a radial direction as shown in Patent Literature 3.
Patent Literature 1: JP-A-5-141259 Publication
Patent Literature 2: JP-A-10-19045 Publication
Patent Literature 3: JP-A-9-273547 Publication

### DISCLOSURE OF THE INVENTION

### PROBLEM THAT THE INVENTION IS TO SOLVE

In the conventional rolling bearing, when the rolling elements are made of a ceramics material, a centrifugal force developing during the rotation becomes small, which enables the bearing to meet high-speed rotation, but there is a problem that the production cost increases. In addition, when the viscosity of the lubricating oil is decreased, it is feared that the life of the rolling bearing may be lowered, and even when the viscosity of the lubricating oil is decreased, there is a problem that the conventional rolling bearing can not sufficiently meet the high-speed rotation as in a turbocharger.

Furthermore, in a rolling bearing shown in Fig. 3 of Patent Literature 3, an inner ring, inner rolling elements, an intermediate ring, outer rolling elements and an outer ring are arranged linearly in a radial direction from the inner side, and therefore the radial dimension of the rolling bearing is increased. As a result, a center hole of a housing in which the rolling bearing is mounted is increased in the radial direction, and there arises an arrangement problem that the center hole interferes with a water cooling jacket, etc., also provided within the housing.
Furthermore, as shown in Fig. 4 of Patent Literature 3, an inner one of intermediate rings disposed between an innermost inner ring and an outermost outer ring has a larger-diameter portion and smaller-diameter portions, and a raceway is formed only on an inner periphery side of the larger-diameter portion, and a raceway is formed only on an outer periphery side of the smaller-diameter portion, and the two raceways are provided in spaced relation to each other, with a space portion existing therebetween. Therefore, the whole of the rolling bearing is increased in length in the axial direction, and a large axial space for receiving this rolling bearing is needed. As a result, there is a problem that it is difficult to provide other parts in adjoining relation thereto.

Furthermore, because of the above construction, the rolling bearing shown in Patent Literature 3 is suited for use as a bearing for a high-speed rotation shaft. However, in this rolling bearing, a friction torque due to rotation develops in the inner bearing portion and the outer bearing portion. In an apparatus using such a rolling bearing and particularly in a turbocharger, it is preferred to provide a structure capable of reducing the friction torque of the rolling bearing since a rotation response is enhanced by decreasing a rotation resistance of the rolling bearing.

Therefore, this invention has been made in view of the above problems, and its object is provide a rolling bearing which can meet high-speed rotation and also can be reduced in radial dimension and axial dimension, and there is provided a supercharger having this rolling bearing.

Another object of this invention is to provide a rolling bearing which can meet high-speed rotation and can reduce a friction torque due to the rotation and also to provide a supercharger having this rolling bearing.

### MEANS FOR SOLVING THE PROBLEM

In order to achieve the above object, a rolling bearing of this invention comprises an inner ring having a first raceway at an outer periphery thereof, an outer ring having a second raceway at an inner periphery thereof, at least one intermediate ring which is interposed between the inner and outer rings, and has a third raceway at an inner periphery thereof and also has a fourth raceway at an outer periphery thereof, a plurality of rolling elements which are rollably interposed between the third raceway of the intermediate ring and the raceway opposed thereto and also between the fourth raceway of the intermediate ring and the raceway opposed thereto, wherein the intermediate ring includes a larger-diameter ring portion, and a smaller-diameter ring portion formed on the larger-diameter ring portion through an inclined ring portion inclined relative to an axis, the smaller-diameter ring portion being smaller in diameter than the larger-diameter ring portion, and the third raceway is formed at a boundary portion between the larger-diameter ring portion and the inclined ring portion, and the fourth raceway is formed at a boundary portion between the smaller-diameter ring portion and the inclined ring portion.

With this construction, there is provided the structure in which the rolling elements are provided at least between the inner ring and the intermediate ring and also between the intermediate ring and the outer ring. Namely, there is provided the structure in which the plurality of groups of rolling elements exist between the inner ring and the outer ring. Therefore, the inner ring and the outer ring can be rotated relative to each other at the number of revolutions which is the sum of the revolution numbers of the groups of rolling elements, that is, the bearing portions. Therefore, there can be obtained the rolling bearing capable of meeting high-speed rotation.

Furthermore, the structure is such that the fourth raceway is formed on the outer peripheral surface of the intermediate portion at the boundary portion between the smaller-diameter ring portion (which is smaller in diameter than the larger-diameter ring portion) and the inclined ring portion, and therefore a pitch diameter of the rolling elements contacting this fourth raceway can be made smaller as compared with a conventional intermediate ring (Fig. 3 of the above Patent Literature 3) having a parallel cylindrical shape extending parallel to the axis, and therefore the radial dimension of the rolling bearing can be reduced.

Furthermore, in the case where the raceway is formed only on the inner periphery side of the larger-diameter portion while the raceway is formed only on the outer periphery side of the smaller-diameter portion as in the conventional intermediate ring (Fig. 4 of the above Patent Literature 3), the two raceways are provided in space relation to each other, with a space portion existing therebetween, and therefore the whole of the rolling bearing is increased in length in the axial direction. In this invention, however, the third raceway and the fourth raceway are formed respectively on the inner peripheral surface and outer peripheral surface of the inclined ring portion, and therefore the rolling elements contacting the third raceway and the rolling elements contacting the fourth raceway can be disposed closer to each other in the axial direction as compared with the conventional structure. Therefore, the axial dimension of the rolling bearing can be reduced.

Furthermore, in this rolling bearing, preferably, the pair of opposed raceways are disposed in angular contact with the rolling elements disposed therebetween.
In this case, the intermediate ring is formed into a structure suited for the angular contact of the rolling elements therewith. Namely, the fourth raceway is formed on the outer periphery of the intermediate ring at the boundary portion between the smaller-diameter ring portion and the inclined ring portion, and therefore at shoulder portions dispose respectively at opposite sides of this fourth raceway, a shoulder diameter of the inclined ring portion is larger than a shoulder diameter of the smaller-diameter ring portion. Therefore, at the fourth raceway, the angular contact raceway can be formed, utilizing the inclination of the inclined ring portion. Also, the third raceway is formed at the boundary portion between the larger-diameter ring portion and the inclined ring portion, and therefore at shoulder portions disposed respectively at opposite sides of this third raceway, a shoulder diameter of the inclined ring portion is smaller than a shoulder diameter of the larger-diameter ring portion. Therefore, at the third raceway, the angular contact raceway can be formed, utilizing the inclination of the inclined ring portion.
Thus, the inner ring and the outer ring need to be thickened at their one shoulder portions so as to achieve the angular contact of the rolling elements. However, the intermediate ring does not need to be thickened at one shoulder portion (the inclined ring portion) so as to achieve the angular contact of the rolling elements. Therefore, the shape of the intermediate ring can be simplified, and the production thereof is easy.

Furthermore, in this rolling bearing, preferably, a pitch diameter of the rolling elements contacting the fourth raceway of the intermediate ring is larger than a pitch diameter of the rolling elements contacting the third raceway of the intermediate ring.
With this construction, the two groups of rolling elements can be disposed closer to each other in the axial direction, with the inclined ring portion of the intermediate ring interposed therebetween, and the axial dimension of the rolling bearing can be made smaller.

Furthermore, at the intermediate ring of this rolling bearing, a raceway diameter of the fourth raceway is preferably smaller than a raceway diameter of the third raceway.
With this construction, the rolling elements, contacting the fourth raceway formed on the intermediate ring at the boundary portion between the smaller-diameter ring portion and the inclined ring portion, are disposed at a radially-inward position, and therefore the radial dimension of the rolling bearings having the plurality of groups of rolling elements can be further reduced.

A supercharger of the present invention comprises a housing, and a turbine shaft supported within the housing through a rolling bearing and having a turbine at one end portion thereof, and the rolling bearing is the above rolling bearing.
In this construction, the rolling bearing can meet high-speed rotation, and therefore can stably support the turbine shaft rotating at high speed. And, the radial dimension of the rolling bearing is reduced, and therefore a radial dimension of a center hole of the housing in which the rolling bearing is mounted can be reduced. Therefore, there can be avoided an arrangement problem that the center hole interferes with other portions provided also within the housing. And besides, since the axial dimension of the rolling bearing can be reduced, an axial space for receiving this rolling bearing can be made small.

### ADVANTAGE OF THE INVENTION

In the present invention, the inner ring and the outer ring can be rotated relative to each other at the number of revolutions which is the sum of the revolution numbers of the groups of rolling elements, and this construction can meet high-speed rotation as a whole. And, the fourth raceway is formed on the outer peripheral surface of the intermediate portion at the boundary portion between the smaller-diameter ring portion (which is smaller in diameter than the larger-diameter ring portion) and the inclined ring portion, and therefore the pitch diameter of the rolling elements contacting this fourth raceway can be made small, and therefore the radial dimension of the rolling bearing can be reduced. Furthermore, the third raceway and the fourth raceway are formed respectively on the inner peripheral surface and outer peripheral surface of the inclined ring portion, and therefore the rolling elements contacting the third raceway and the rolling elements contacting the fourth raceway can be disposed closer to each other in the axial direction. Therefore, the axial dimension of the rolling bearing can be reduced.

Furthermore, in order to achieve the above object, a rolling bearing of this invention comprises an inner ring having a first raceway at an outer periphery thereof, an outer ring having a second raceway at an inner periphery thereof, at least one intermediate ring which is interposed between the inner and outer rings, and has a third raceway at an inner periphery thereof and also has a fourth raceway at an outer periphery thereof, a plurality of first balls rollably interposed between the third raceway of the intermediate ring and the raceway opposed thereto, and a plurality of second balls rollably interposed between the fourth raceway of the intermediate ring and the raceway opposed thereto, and a diameter of the second balls is smaller than a diameter of the first balls.

With this construction, bearing portions each having the plurality of balls are provided at least between the inner ring and the intermediate ring and also between the intermediate ring and the outer ring. Namely, the bearing portions exist in a plurality of stages between the inner ring and the outer ring. Therefore, the inner ring and the outer ring can be rotated relative to each other at the number of revolutions which is the sum of the revolution numbers of the bearing portions. Therefore, the rolling bearing can meet high-speed rotation. Furthermore, the diameter of the second balls is smaller than the diameter of the first balls, and therefore a friction torque at the bearing portion having the second balls can be made smaller as compared with conventional structures, and the friction torque of the rolling bearing can be reduced.

In this invention, there is provided the construction in which the bearing portions each having the plurality of balls exist in the plurality of stages between the inner and outer rings. The inner ring and the outer ring can be rotated relative to each other at the number of revolutions which is the sum of the revolution numbers of the bearing portions arranged in the plurality of stages, and this construction can meet high-speed rotation as a whole. Furthermore, the friction torque at the bearing portion having the second balls can be reduced, and the friction torque of the rolling bearing can be reduced.

### BRIEF DESCRIPTION OF THE DRAWINGS

Fig. 1 is a cross-sectional view showing a first embodiment of a rolling bearing of the present invention.
Fig. 2 is a cross-sectional view showing a modified example of the first embodiment of the rolling bearing of the present invention.
Fig. 3 is a cross-sectional view showing a supercharger in which rolling bearings of Fig. 1 are used.
Fig. 4 is an explanatory view explaining an intermediate ring of the present invention.
Fig. 5A is a graph explaining start-up characteristics achieved by the rolling bearing of the present invention.
Fig. 5B is a graph explaining a vibration damping effect by the rolling bearing of the present invention.
Fig. 6A is a graph corresponding to Fig. 5A, but showing a comparative example.
Fig. 6B is a graph corresponding to Fig. 5B, but showing the comparative example.
Fig. 7 is a graph formed by combining the graph of Fig. 5B and the graph of Fig. 6B together.
Fig. 8 is a cross-sectional view showing a second embodiment of a rolling bearing of this invention.
Fig. 9 is a cross-sectional view showing a modified example of the second embodiment of the rolling bearing of this invention.
Fig. 10 is a graph explaining the reduction of a friction torque by the rolling bearing of this invention.

### BEST MODE FOR CARRYING OUT THE INVENTION

Embodiments of the present invention will hereafter be described with reference to the drawings.

### First Embodiment

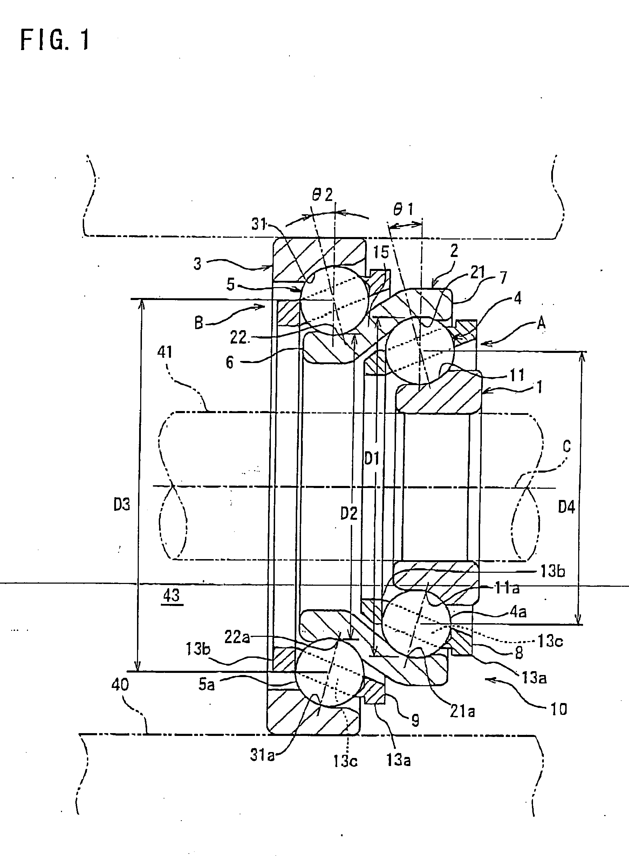

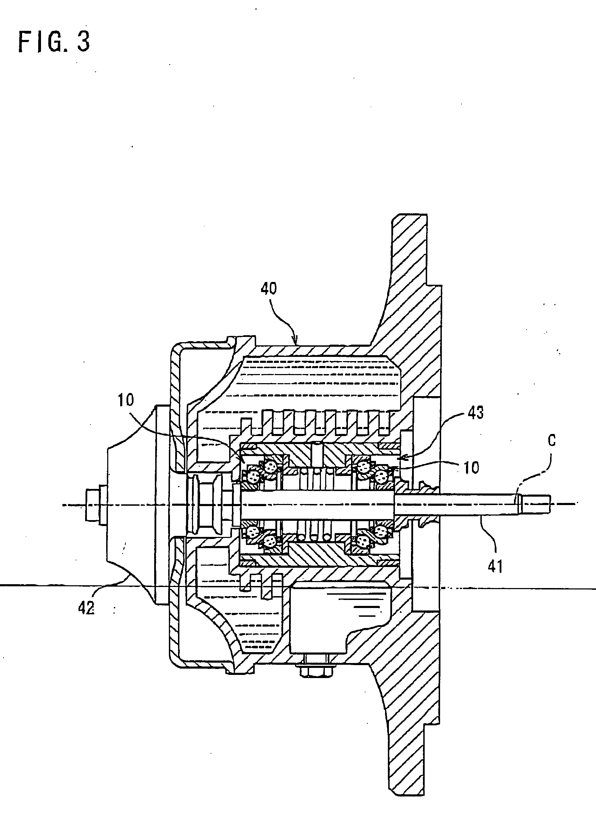

Fig. 1 is a cross-sectional view showing a first embodiment of a rolling bearing of this invention. This rolling bearing 10 rotatably supports a rotation shaft 41 in a center hole 43 formed within a housing 40. An apparatus in which such rolling bearing 10 is used is, for example, a turbocharger serving as a supercharger for an automobile engine, shown in Fig. 3. In this Fig. 3, the rolling bearings 10 are provided in two rows in spaced relation to each other in a direction of an axis C.

In Fig. 3, this turbocharger comprises the housing 4, and the turbine shaft 41 supported in the center hole 43 in the housing 40 through the above rolling bearings 10. This turbine shaft 41 has a turbine 42 mounted on one end portion thereof. The rolling bearings 10 support the turbine shaft 41 such that this turbine shaft can be rotated about the axis C.

In Fig. 1, this rolling bearing 10 comprises a single inner ring 1 fitted on the turbine shaft 41, a single outer ring 3 fixed to an inner peripheral surface of the center hole 43 of the housing 40, and a single intermediate ring 2 interposed between the inner ring 1 and the outer ring 3. The inner ring 1, the intermediate ring 2 and the outer ring 3 are arranged in this order in offset relation in the direction of the axis C. Namely, this rolling bearing 10 has an axial arrangement extending in the axial direction. It further includes a row of first rolling elements 4 rollably disposed in an annular space between the inner ring 1 and the intermediate ring 2, and a row of second rolling elements 5 rollably disposed in an annular space between the intermediate ring 2 and the outer ring 3.

The first rolling elements 4 as well as the second rolling elements 5 comprise a plurality of balls, and the plurality of balls 4a (serving as the first rolling elements 4) are held on a circle (having its center disposed on the axis C) by a cage 8, while the plurality of balls 5a (serving as the second rolling elements 5) are held on a circle (having its center disposed on the axis C) by a cage 9. The balls 4a and 5a have the same diameter.

The inner ring 1 is an annular member, and its inner peripheral surface serves as a fitting surface fitted on the turbine shaft 41, and a first raceway 11 contacting the balls 4a (serving as the first rolling elements 4) is formed on an outer peripheral surface thereof.
The outer ring 3 is an annular member, and its outer peripheral surface serves as a fitting surface fitted to the inner peripheral surface of the center hole 43 of the housing 40, and a second raceway 31 contacting the balls 5a (serving as the second rolling elements 5) is formed on an inner peripheral surface thereof. An axial dimension of the inner ring 1 is generally equal to an axial dimension of the outer ring 3.

The intermediate ring 2 is an annular member, and is larger in axial dimension than the inner ring 1 and the outer ring 3. A third raceway 21 contacting the balls 4a (serving as the first rolling elements 4) is formed on a portion of an inner peripheral surface of the intermediate ring 2, and a fourth raceway 22 contacting the balls 5a (serving as the second rolling elements 5) is formed on a portion of an outer peripheral surface of the intermediate ring 2. The inner ring 1, the intermediate ring 2 and the outer ring 3 are arranged in a concentric manner with their centers coinciding with the axis C although they are offset from one another in the direction of the axis C.

The intermediate ring 2 includes a larger-diameter ring portion 7 of an annular shape, and a smaller-diameter ring portion 6 of an annular shape formed on this larger-diameter ring portion 7 through an inclined ring portion 15. A diameter of an outer peripheral surface of the smaller-diameter ring portion 6 is smaller than a diameter of an outer peripheral surface of the larger-diameter ring portion 7. The inclined ring portion 15 extends linearly in a direction inclined relative to the axis C. The larger-diameter ring portion 7 is disposed radially outwardly of the inner ring 1 with the first rolling elements 4 interposed therebetween. The smaller-diameter ring portion 6 is continuous with this larger-diameter ring portion 7 in the axial direction through the inclined ring portion 15, and the outer ring 3 is disposed radially outwardly of this smaller-diameter ring portion 6 with the second rolling elements 5 interposed therebetween. Thus, the smaller-diameter ring portion 6 is smaller in radial dimension than the larger-diameter ring portion 7, and the outer ring 3 is disposed around the outer periphery of this smaller-diameter ring portion 6 with the second rolling elements 5 interposed therebetween, and therefore the diameter of the outer ring 3 can be reduced. Therefore, the radial dimension of the rolling bearing 10 can be reduced, and there is provided the structure in which a radial arrangement projecting much in the radial direction is avoided.

The annular third raceway 21 is formed at a boundary portion between the inner peripheral surface of the larger-diameter ring portion 7 and the inner peripheral surface of the inclined ring portion 15, and the annular fourth raceway 22 is formed at a boundary portion between the outer peripheral surface of the smaller-diameter ring portion 6 and the outer peripheral surface of the inclined ring portion 15. The intermediate ring 2 has a bent shape in its longitudinal cross-section.

A pitch diameter D3 of the second rolling elements 5 contacting the fourth raceway 22 of the intermediate ring 2 is larger than a pitch diameter D4 of the first rolling elements 4 contacting the third raceway 21. Therefore, the first and second rolling elements 4 and 5 can be disposed close to each other in the direction of the axis C with the inclined ring portion 15 of the intermediate ring 2 interposed therebetween, and the axial dimension of the rolling bearing 10 can be reduced. Incidentally, the pitch diameter means a diameter of a circle passing through the centers of the balls (serving as the rolling elements).

Furthermore, the balls 4a (serving as the first rolling elements 4) are disposed in angular contact with the pair of opposed first and third raceways 11. and 21, and the balls 5a (serving as the second rolling elements 5) are disposed in angular contact with the pair of opposed fourth and second raceways 22 and 31. Contact angles θ1 and θ2 thereof are equal to each other, and for example are 15° in Fig. 1. Therefore, the rolling bearing 10 can receive loads (axial loads) in the direction of the axis C. Furthermore, the rolling bearing 10 has the axial arrangement extending in the direction of the axis C, and therefore has an axial-damper performance.

Furthermore, the intermediate ring 2 is formed into a structure suited for the angular contact of the rolling elements 4 and 5 therewith. Namely, the fourth raceway 22 is formed on the outer periphery of the intermediate ring 2 at the boundary portion between the smaller-diameter ring portion 6 and the inclined ring portion 15, and therefore at shoulder portions disposed respectively at opposite sides of the fourth raceway 22, a shoulder diameter of the inclined ring portion 15 is larger than a shoulder diameter of the smaller-diameter ring portion 6. Therefore, at the fourth raceway 22, the angular contact raceway can be formed, utilizing the inclination of the inclined ring portion 15. Also, the third raceway 21 is formed at the boundary portion between the larger-diameter ring portion 7 and the inclined ring portion 15, and therefore at shoulder portions disposed respectively at opposite sides of the third raceway 21, a shoulder diameter of the inclined ring portion 15 is smaller than a shoulder diameter of the larger-diameter ring portion 7. Therefore, at the third raceway 21, the angular contact raceway can be formed, utilizing the inclination of the inclined ring portion 15.
Thus, the inner ring 1 and the outer ring 3 need to be thickened at their one shoulder portions so as to achieve the angular contact of the rolling elements 4 and 5. However, the intermediate ring 2 does not need to be thickened at one shoulder portion (the inclined ring portion 5) so as to achieve the angular contact of the rolling elements 4 and 5. Therefore, the structure of the intermediate ring 2 is simplified, and the intermediate ring 2 can be easily produced by plastically deforming a cylinder having a uniform thickness.

In this intermediate ring 2, the smaller-diameter ring portion 6 is smaller in diameter than the larger-diameter ring portion 7 as described above, and furthermore a raceway diameter D2 of the fourth raceway 22 of the smaller-diameter ring portion 6 is smaller than a raceway diameter D1 of the third raceway 21 of the larger-diameter ring portion 7 (D2 < D1). Incidentally, the raceway diameter D2 of the fourth raceway 22 is a diameter of the smallest-diameter portion of the raceway 22, and the raceway diameter D1 of the third raceway 21 is a diameter of the largest-diameter portion of the raceway D1.

In the above construction, the balls 4a (serving as the first rolling elements 4) are rollably interposed between the pair of opposed first and third raceways 11 and 21 of the inner and intermediate rings 1 and 2, and the balls 5a (serving as the second rolling elements 5) are rollably interposed between the pair of opposed second and fourth raceways 22 and 31 of the intermediate and outer rings 2 and 3. This rolling bearing 10 has the plurality of groups (two stages) of rolling elements 4 and 5 disposed between the inner ring 1 (fitted on the turbine shaft 41) and the outer ring 3 fixed to the housing 40. Namely, this rolling bearing 10 comprises a first bearing portion A formed by the inner ring 1, the first rolling elements 4 and the intermediate ring 2 (this intermediate ring 2 serves as an outer ring), and a second bearing portion B formed by the intermediate ring 2 (this intermediate ring 2 serves as an inner ring), the second rolling elements 5 and the outer ring 3.

In the rolling bearing 10 of the above construction, when the turbine shaft 41 is rotated at a predetermined number of revolutions, the inner ring 1 of the rolling bearing 10 is rotated at this predetermined number of revolutions relative to the outer ring 3. In this rotating condition; this predetermined number of revolutions is distributed to the first and second bearing portions A and B arranged in the two stages. Namely, although the inner ring 1 rotates in unison with the turbine shaft 41, the intermediate ring 2 rotates together with the inner ring 2 at a speed lower than the speed of the inner ring (that is, in a decelerated condition). As a result, the number of revolutions at the bearing portion of each stage is smaller than the above predetermined number of revolutions, and therefore the whole of the rolling bearing enables the higher-speed rotation as compared with conventional ones. More specifically, when the turbine shaft 41 is rotated, for example, at 200,000 rpm, the first (inner) bearing portion A close to the turbine shaft 41 rotates at 160,000 rpm, while the second (outer) bearing portion B close to the housing 40 rotates at 40, 000 rpm which is lower than the speed of the first bearing portion A. The rotational speeds distributed respectively to the bearing portions A and B arranged in the plurality of stages are automatically changed in accordance with a change of the rotational speed of the turbine shaft 41 (the inner ring 1). At this time, the second bearing portion B including the outer ring 3 is rotated at a speed lower than that of the first bearing portion A including the inner ring 1, and the rotational speed is distributed to the bearing potions A and B in a predetermined ratio.

The intermediate ring 2 of this rolling bearing 10 has such a structure that the fourth raceway 22 is formed on the outer peripheral surface of the boundary portion between the smaller-diameter ring portion 6 (smaller in diameter than the larger-diameter ring portion 7) and the inclined ring portion 15. With this construction, the second rolling elements 5 (contacting the fourth raceway 22 formed at the boundary portion between the smaller-diameter ring portion 6 and the inclined ring portion 5) are disposed at the radially-inward position, and therefore the radial dimension of the rolling bearing 10 can be reduced. Namely, the diameter of the outer peripheral surface of the outer ring 3 can be reduced. Therefore, the inner diameter of the center hole 43 of the housing 40 (in which these rolling bearings 10 are fixedly received) can be reduced. As a result, the center hole 43 can be prevented from interfering, for example, with a cooling water jacket and a passage (for supplying a lubricant to the rolling bearings) provided in the housing 40.

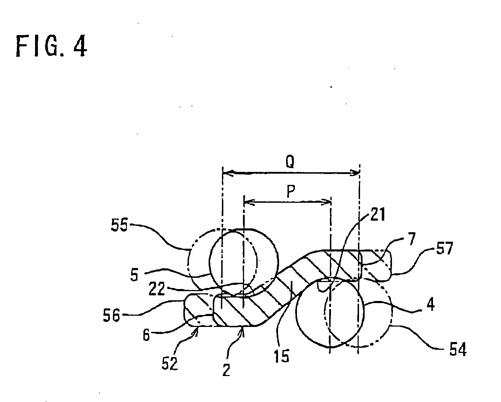

Furthermore, in the intermediate ring 2 of this rolling bearing 10, the third raceway 21 is formed on the inner peripheral surface of the boundary portion between the larger-diameter ring portion 7 and the inclined ring portion 15, and the fourth raceway 22 is formed on the outer peripheral surface of the boundary portion between the smaller-diameter ring portion 6 and the inclined ring portion 15. Therefore, the axial dimension of the rolling bearing can be reduced.
This will be described with reference to Fig. 4, and in the case of a comparative example in which a raceway is formed only on an inner periphery of a larger-diameter ring portion 57 of an intermediate ring 52 indicated in dots-and-dash lines, and also a raceways is formed only on an outer periphery of a smaller-diameter ring portion 56, the distance Q between rolling elements 54 and rolling elements 55 (contacting the two raceways, respectively) in the axial direction is increased, and the overall length of the rolling bearing in the axial direction is increased. In this invention, however, the third raceway 21 and the fourth raceway 22 are formed respectively on the inner peripheral surface and outer peripheral surface of the inclined ring portion 15 as indicated in solid lines, and therefore the distance P between the rolling elements 4 and the rolling elements 5 (contacting the third and fourth raceways 21 and 22, respectively) in the axial direction can be made smaller than the distance Q of the above comparative example (P < Q). Namely, the rolling elements 4 and the rolling elements 5 can be disposed closer to each other in the axial direction, and therefore the axial dimension of the rolling bearing can be reduced.

Furthermore., the third raceway 21 and the fourth raceway 22 are formed respectively on part of the inner peripheral surface of the inclined ring portion 15 and part of the outer peripheral surface thereof, and the pitch diameter D3 of the second rolling elements 5. contacting the fourth raceway 22 is larger than the pitch diameter D4 of the first rolling elements 4 contacting the third raceway 21, and therefore the first rolling elements 4 and the second rolling elements 5 can be disposed close to each other in the direction of the axis C. Therefore, the dimension of the rolling bearing 10 in the direction of the axis C can be reduced. Therefore, a space for receiving the rolling bearing 10 in the direction of the axis C can be reduced, and other parts can be easily provided adjacent to the rolling bearing.

Furthermore, in the intermediate ring 2 shown in Fig. 1, a. raceway surface 22a. of the fourth raceway 22 is disposed radially inwardly of a raceway surface 21a of the third raceway 21, and therefore the second rolling elements 5 contacting the fourth raceway 22 are disposed more radially inwardly, and therefore the radial dimension can be further reduced.

Furthermore, the intermediate ring 2 is of such a construction that it is supported by the inner ring 1 and the outer ring 3 through the rolling elements 4 and 5, and is disposed in angular contact with the rolling elements 4 and 5, and therefore the construction is such that a bearing gap (a bearing gap in the first bearing portion A) set between the inner ring 1 and the intermediate ring 2 and a bearing gap (a bearing gap in the second bearing portion B) set between the outer ring 3 and the intermediate ring 2 are automatically adjusted to respective appropriate values according to the number of revolutions.

Furthermore, loads applied to the intermediate ring 2 respectively from the rolling elements 4 and 5 are received respectively by the third raceway 21 and the fourth raceway 22 which are offset from each other in the axial direction, and therefore the intermediate ring itself acts like a leaf spring, and achieves a high vibration damping effect.

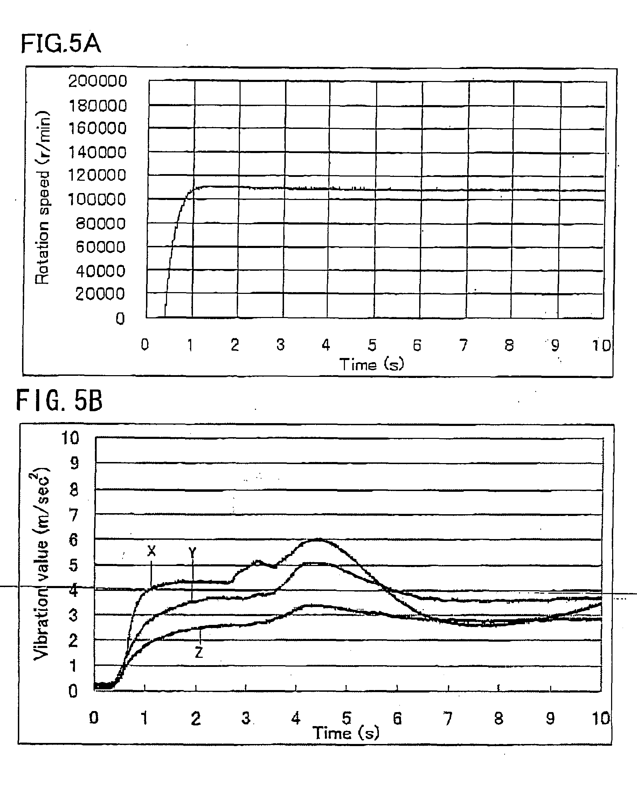

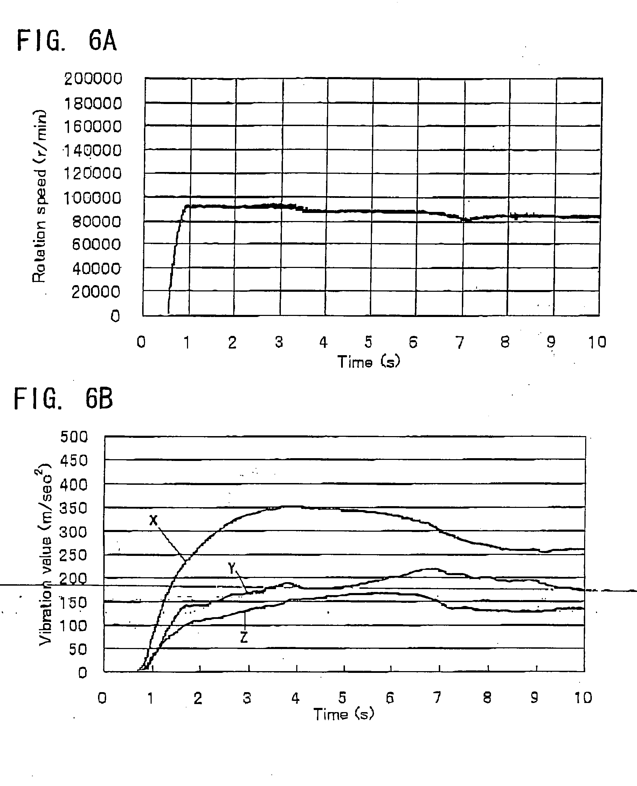

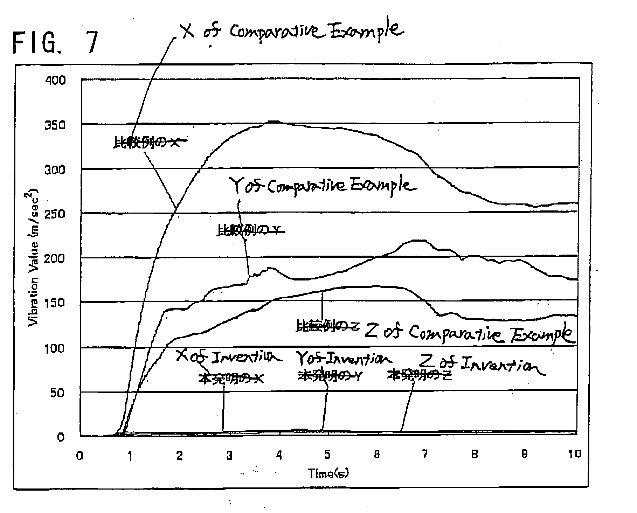

Figs. 5A to 7 are graphs explanatory of the vibration damping effect achieved by the rolling bearing 10 of this invention. Fig. 5A is the graph showing a start-up of a rotational speed obtained when an air pressure of 0.053 MPa is fed in a turbo test apparatus (in a condition in which a housing of a compressor is not provided) in which two rolling bearings of the present invention are provided, and Fig. 5B is the graph showing a vibration value obtained in this case. X-represents a damping value of the rolling bearing in an axial direction, Y represents a damping value of the rolling bearing in a horizontally radial direction, and Z represents a damping value of the rolling bearing in a vertically radial direction. On the other hand, Fig. 6A is the graph showing a start-up of a rotational speed obtained in a comparative example in which conventional rolling bearings having no second bearing portion (rolling bearings in which rolling elements are provided in one stage) are used, and Fig. 6B is the graph showing a vibration value obtained in this case, Fig. 7 is the graph showing simultaneously the vibration values of Fig. 5B and the vibration values of Fig. 6B. As is clear from these graphs, when the rolling bearing of this invention is used, the maximum number of revolutions after the start-up can be increased, and also the damping values are greatly reduced, and it will be appreciated that the high damping effect can be obtained. A comparison of Fig. 5A with Fig. 6A indicates that the ultimate number of revolutions of the rolling bearing of the present invention is different from that of the comparative example when the same air pressure of 0.035 MPa is fed. The ultimate number of revolutions of the rolling bearing of the present invention is higher, and a rotation resistance in the bearing is smaller, and namely this proves that the bearing is a low torque type.

### Modified Example of First Embodiment

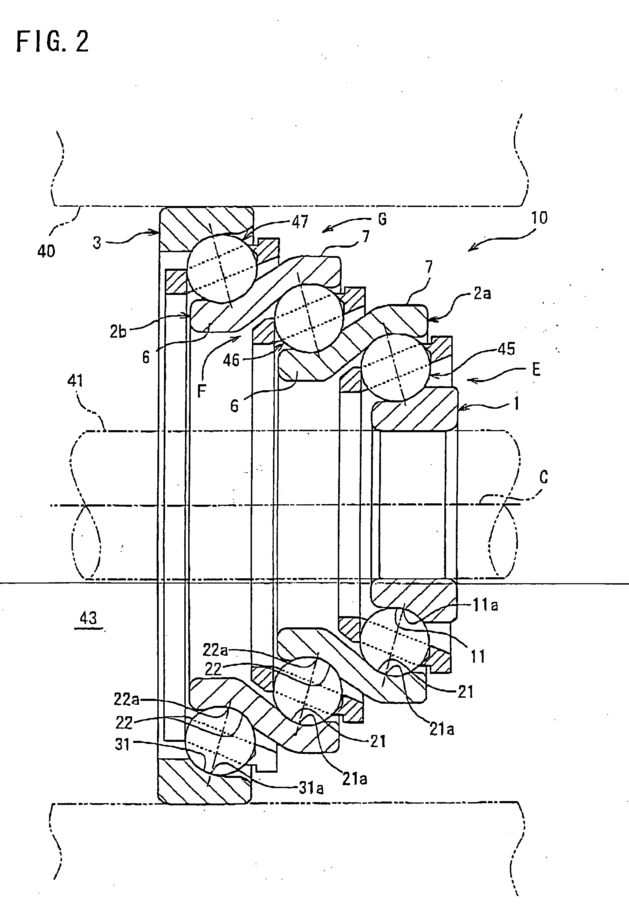

The rolling bearing 10 of the present invention is acceptable in so far as at least one intermediate ring 2 is interposed between the inner and outer rings 1 and 3, and the plurality of rolling elements are rollably interposed between each pair of opposed raceways of the inner ring 1, the intermediate ring 2 and the outer ring 3. Also, two intermediate rings 2a and 2b may be interposed between the inner and outer rings 1 and 3 as shown in Fig. 2. In this case, the inner ring 1, the first intermediate ring 2a, the second intermediate ring 2b and the outer ring 3 are arranged in this order in offset relation in the direction of the axis C. A row of first rolling elements 45 are rollably disposed in an annular space between the inner ring 1 and the first intermediate ring 2a, and a row of second rolling elements 46 are rollably disposed in an annular space between the first intermediate ring 2a and the second intermediate ring 2b, and a row of third rolling elements 47 are rollably disposed in an annular space between the second intermediate ring 2b and the outer ring 3.

These intermediate rings 2a and 2b are identical in construction to the intermediate ring 2 of the first embodiment, and each of the intermediate rings 2a and 2b includes a larger-diameter ring portion 7 of an annular shape, and a smaller-diameter ring portion 6 of an annular shape formed on this larger-diameter ring portion 7 through an inclined ring portion 15. In each of the intermediate rings 2a and 2b, a third raceway 21 is formed at a boundary portion between an inner peripheral surface of the larger-diameter ring portion 7 and an inner peripheral surface of the inclined ring portion 15, and a fourth raceway 22 is formed at a boundary portion between an outer peripheral surface of the smaller-diameter ring portion 6 and an outer peripheral surface of the inclined ring portion 15.

This rolling bearing 10 has such a structure that the rolling elements 45, 46 and 47 are arranged in three stages between the inner ring 1 (fitted on the turbine shaft 41) and the outer ring 3 fixed to the housing 40. Namely, in this rolling bearing 10, a first bearing portion E is formed by the inner ring 1, the first rolling elements 45 and the first intermediate ring 2a such that the first intermediate ring 2a serves as an outer ring, and a second bearing portion F is formed by the first intermediate ring 2a, the second rolling elements 46 and the second intermediate ring 2b such that the first intermediate ring 2a serves as an inner ring while the second intermediate ring 2b serves as an outer ring, and a third bearing portion G is formed by the second intermediate ring 2b, the third rolling elements 47 and the outer ring 3 such that the second intermediate ring 2b serves as an inner ring. With this construction, the overall number of revolutions of the rolling bearing 10 is distributed to the bearing portions E, F and G, and the rolling bearing 10 capable of meeting a higher-speed operation can be obtained.

Furthermore, as the materials used in the rolling bearing 10 of the present invention, known ones can be used, and particularly when the balls serving as the rolling elements and the intermediate ring are made of lightweight ceramics materials, there is achieved the structure capable of supporting the shaft rotating at still higher speed.

In the rolling bearing 10 of each of the above embodiments, the inner ring 1 can rotate relative to the outer ring 3 at the number of revolutions which is the sum of the revolution numbers of the plurality of groups of rolling elements, that is, the bearing portions. With this construction, there can be obtained the rolling bearing 10 which can meet a high-speed rotation as a whole. Thus, in this rolling bearing 10, the overall allowable number of revolutions is increased, and therefore the rolling bearing can support the rotating turbine shaft 41 with high safety, and can stably support the turbine shaft 41 even when this turbine shaft rotates at high speed.

Furthermore, the overall number of revolutions is distributed to the bearing portions, and therefore a temperature rise due to the high-speed rotation can also be reduced. Therefore, a dimensional change of the bearing portions due to a temperature change can also be reduced to a small level. And besides, since the number of revolutions at each bearing portion is reduced, an advantageous effect can be obtained with respect to a lubricant in the rolling bearing 10. Namely, a temperature rise is reduced, and therefore there can be used the type of lubricating oil which is lower in thermal resistant and cheaper than lubricating oil heretofore used. And besides, vegetable oil and biodegradable oil which are more advantageous in the preservation of the global environment than conventional ones can be used.

Furthermore, the number of revolutions is distributed to the multi-stage bearing portions, so that the number of revolutions at each bearing portion is reduced, and therefore the rotation resistance at each bearing portion is reduced. Therefore, the rolling bearing 10 can be formed into a low-torque design as a whole. Therefore, in the turbocharger employing such rolling bearings 10, the rotation resistance is reduced at the rolling bearing (10) portions, and therefore a rotation response is enhanced, and a turbo lag can be suppressed.

Furthermore, the bearing portions are arranged in the plurality of stages, and therefore when applying a preload to the rolling bearing 10, the adjustment of the preload at each of the bearing portions can be effected. Therefore, the preload for the whole of the rolling bearing 10 can be adjusted minutely and precisely.
Furthermore, each cage has an annular shape as shown in Figs. 1 and 3, and the cage, when viewed in a cross-section, is inclined from one end portion thereof to the other end portion thereof in the direction of the axis C. Namely, with reference to Fig. 1, each of the cages 8 and 9 includes a larger-diameter portion 13a, a smaller-diameter portion 13b, and an inclined portion 13c interconnecting these in the axial direction and inclined in a similar manner to the inclined ring portion 15 of the intermediate ring 2. With this construction, when the balls 4a, 5a roll, the cage 8, 9 stirs the air in the vicinities of the balls 4a, 5a, thereby enhancing the cooling effect.

The rolling bearing 10 of the present invention is not limited to the illustrated forms, and may take other form within the scope of this invention, and three or more intermediate rings maybe provided. In this case, the number of revolutions at each bearing portion is further reduced, and there can be obtained the type of rolling bearing capable of meeting a still higher-speed operation. Furthermore, there may be used a construction in which the outer ring 3 is rotated.

### Second Embodiment

This embodiment differs from the first embodiment in that the diameter of second balls serving as rolling elements is smaller than the diameter of first balls serving as rolling elements. In the following description, those constructions identical to those of the first embodiment will be designated by identical reference numerals, respectively, and explanation thereof will be omitted.

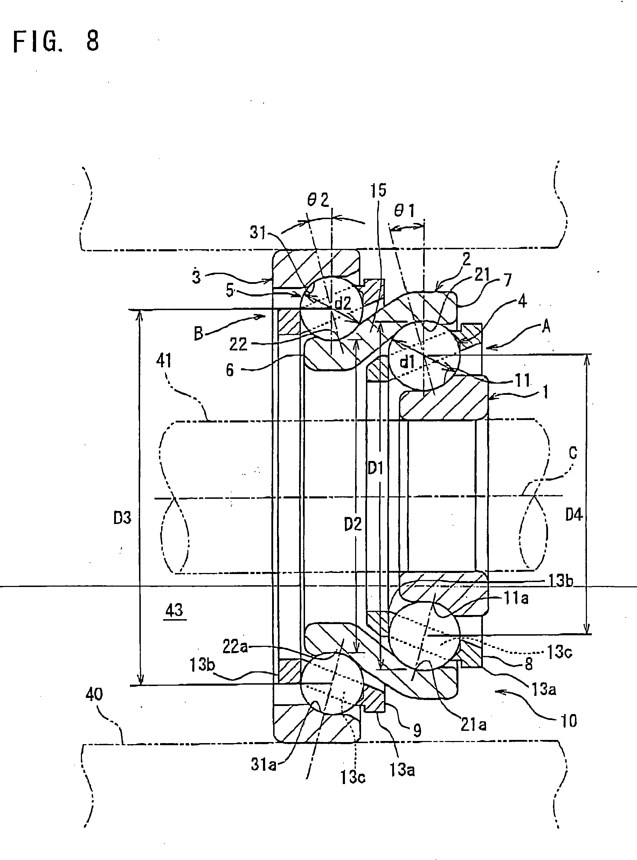

In the second embodiment, as shown in Fig. 8, the diameter d2 of the second balls 5' disposed radially inwardly of an intermediate ring 2 is smaller than the diameter d1 of the first balls 4' disposed radially outwardly of the intermediate ring 2 (d2 < d1). The number of the second balls 5' is larger than the number of the first balls 4'. More specifically, for example, in a rolling bearing 10 in which a diameter of an outer ring 3 is 20 mm, and an inner diameter of an inner ring 1 is 6 mm, the number of the second balls 5' is 12, and the diameter d2 thereof is 2.381 mm (6/64 inches), and the number of the first balls 4' is 8, and the diameter d1 thereof is 2.778 mm (7/64 inches).

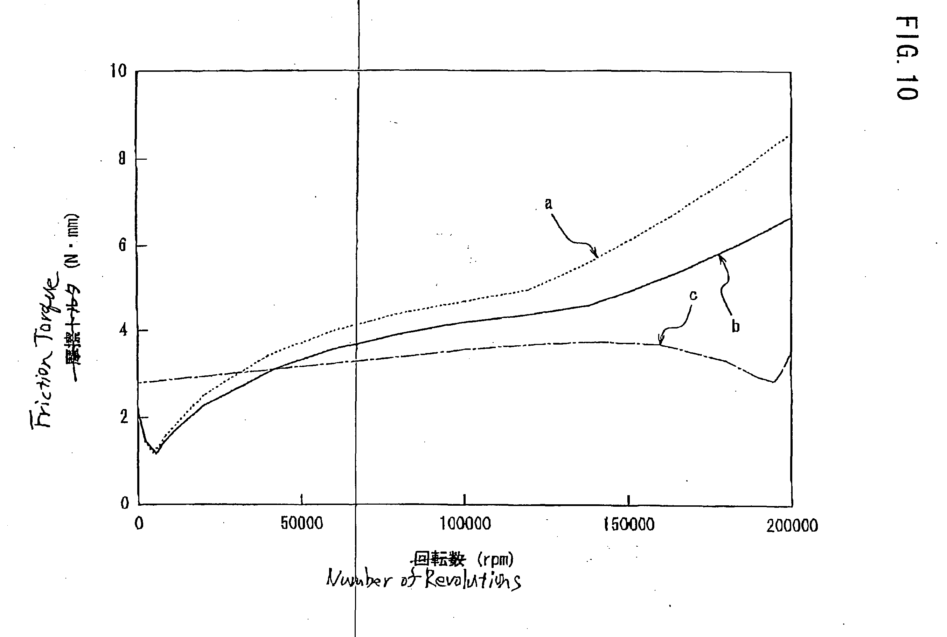

In this embodiment, the diameter d2 of the second balls 5 is smaller than the diameter d1 of the first balls 4, and therefore a friction torque at a secondbearing portion B having the second balls 5 can be made smaller as compared with a conventional structure, and the friction torque of the rolling bearing 10 can be reduced. Fig. 10 is a graph explaining the reduction of the friction torque by the rolling bearing 10 of this invention. This diagram shows results of a simulation representing friction torques at a first bearing potion A and the second bearing portion B of the rolling bearing 10 of the second embodiment shown in Fig. 8. Fig. 10 shows the friction torques (ordinate axis) at the first bearing portion A and the second bearing portion B, which are obtained when the number of revolutions of the inner ring 1 relative to the outer ring 3 is 200, 000 rpm, and the number of revolutions (abscissa axis) of the intermediate ring 2 is varied. In Example, the diameter of the outer ring 3 is 20 mm, and the inner diameter of the inner ring 1 is 6 mm, and the number of the first balls 4' is 8, and the diameter d1 thereof is 2.778 mm (7/64 inches), and the number of the second balls 5' is 12, and the diameter d2 thereof is 2.381 mm (6/64 inches). The balls 4' and 5' are made of a ceramics material, and contact angles are both 15º. A pitch diameter D4 of the first balls 4' is 11 mm, and a pitch diameter D3 of the second balls 5' is 15 mm. And, a radial load of 60N is caused to act on the rolling bearing 10.

In Fig. 10, a broken line (arrow a) is related to a rolling bearing of Comparative Example in which first balls and second balls have the same diameter (2.778 mm), and represents a friction torque of a radially outwardly-disposed second bearing portion B. This Comparative Example is the same as Example except that the first balls and the second balls have the same diameter. A solid line (arrow b) represents the friction torque of the second bearing portion B of Example. A dot-and-dash line (arrow c) represents a friction torque at the fist bearing portion A of each of Comparative Example and Example. As shown in Fig. 10, the friction torque at the second bearing portion B of Example is smaller than that of Comparative Example particularly in an operating range of from 60, 000 rpm to 200,000 rpm which is a wide range. Namely, by making the diameter d2 of the second balls 5' smaller than the diameter d1 of the first balls 4', the friction torque at the second bearing portion B having the second balls 5' can be reduced.

Furthermore, in the rolling bearing of this second embodiment, although the diameter d2 of the second balls 5' is smaller than the diameter d1 of the first balls 4', the number of the second balls 5' is larger than the number of the first balls 4', and therefore a loading capacity of the second bearing portion B (having the second balls 5') for an external force (an axial force, a radial force) can be prevented from being reduced.

### Modified Example of Second Embodiment

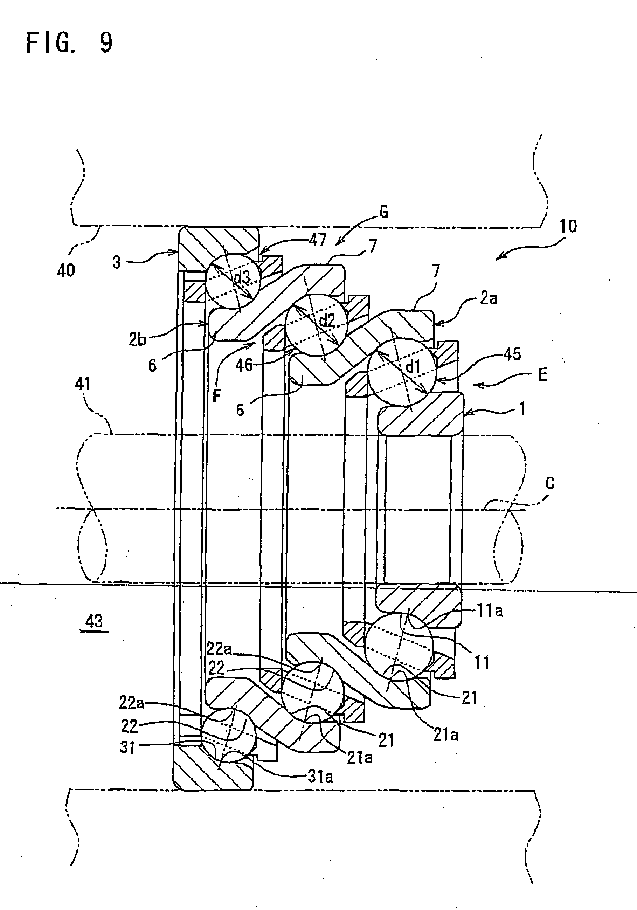

As shown in Fig. 9, two intermediate rings 2a and 2b may be interposed between the inner and outer rings 1 and 3 as in the modified example of the first embodiment shown in Fig. 2, The construction of the modified example of the second embodiment except the ball construction is similar to the construction of the modified example of the first embodiment, and therefore description thereof will be omitted here.

In the modified example of the second embodiment, at radially outer and inner sides of the first intermediate ring 2a, the diameter d2 of second balls 46' is smaller than the diameter d1 of first balls 45' (d2 < d1), and further at radially outer and inner sides of the second intermediate ring 2b, the diameter d3' of third balls 47' is smaller than the diameter d2 of the second balls 46' (d3 < d2). Namely, the relation, (the diameter d1 of the first balls 45') > (the diameter d2 of the second balls 46) > (the diameter d3 of the third balls 47'), is obtained.

The rolling bearings 10 of the s.econd embodiment and its modified example are not limited to the illustrated forms, and may take other form within the scope of this invention. Although not shown, instead of forming the intermediate rings 2 of Fig. 8 and Fig. 9 into a bent shape, these may have a short cylindrical shape parallel to the axis C. Furthermore, instead of arranging the first balls 4 and the second balls 5 in offset relation in the axial direction, the first balls 4 and the secondballs 5 may be arranged on a plane perpendicular to the axis C. Furthermore, the rolling bearing of this invention may be of such a construction that the outer ring 3 is rotated.

In the rolling bearing 10 of each of the above embodiments, the inner ring 1 can rotate relative to the outer ring 3 at the number of revolutions which is the sum of the revolution numbers of the bearing portions. With this construction, there can be obtained the rolling bearing 10 which can meet a high-speed rotation as a whole. Thus, in this rolling bearing 10, the overall allowable number of revolutions is increased, and therefore the rolling bearing can support the rotating turbine shaft 41 with high safety, and can stably support the turbine shaft 41 even when this turbine shaft rotates at high speed.
Furthermore, as the materials used in the rolling bearing 10 of this invention, known ones may be used, and particularly when the balls and the intermediate ring are made of lightweight ceramics materials, there is achieved the structure capable of supporting the shaft rotating at still higher speed.

Furthermore, the overall number of revolutions is distributed to the bearing portions, and the friction torque at the bearing portions can be reduced, and therefore a temperature rise due to the high-speed rotation can also be reduced. Therefore, a dimensional change of the bearing portions due to a temperature change can also be reduced to a small level. And besides, since the number of revolutions at each bearing portion is reduced, an advantageous effect can be obtained with respect to a lubricant in the rolling bearing 10. Namely, a temperature rise is reduced, and therefore there can be used the type of lubricating oil which is lower in thermal resistant and cheaper than lubricating oil heretofore used. And besides, vegetable oil and biodegradable oil which are more advantageous in the preservation of the global environment than conventional ones can be used.

Furthermore, the number of revolutions is distributed to the multi-stage bearing portions, so that the number of revolutions at each bearing portion is reduced, and therefore the rotation resistance at each bearing portion is reduced. Further, the friction torque at each bearing portion is reduced, and therefore the rolling bearing 10 can be formed into a low-torque design as a whole. Therefore, in the turbocharger employing such rolling bearings 10, the rotation resistance is reduced at the rolling bearing (10) portions, and therefore a rotation response is enhanced, and start-up characteristics are enhanced such that the number of revolutions is rapidly increased, and a turbo lag can be more effectively suppressed.

Furthermore, the bearing portions are arranged in the plurality of stages, and therefore when applying a preload to the rolling bearing 10, the adjustment of the preload at each of the bearing portions can be effected. Therefore, the preload for the whole of the rolling bearing 10 can be adjusted minutely and precisely.
Furthermore, each cage has an annular shape as shown in Figs, 1 and 2, and the cage, when viewed in a cross-section, is inclined from one end portion thereof to the other end portion thereof in the axial direction. Namely, with reference to Fig. 1, each of the cages 8 and 9 includes the larger-diameter portion 13a, the smaller-diameter portion 13b, and the inclined portion 13c interconnecting these in the axial direction, and the inclined portion 13c is inclined in a similar manner to the inclined ring portion 15 of the intermediate ring 2. With this construction, when the balls 4, 5 roll, the cage 8, 9 stirs the air in the vicinities of the balls 4, 5, thereby enhancing the cooling effect.

Furthermore, three or more intermediate rings may be provided. In this case, the number of revolutions at each bearing portion is further reduced, and there can be obtained the type of rolling bearing capable of meeting a still higher-speed operation. With respect to the balls of the bearing portions arranged in the plurality of stages from the radially inward side to the radially outward side, the diameter of the most radially inwardly-disposed balls is the largest, and the diameter of the balls becomes smaller toward the radially outward side, and the diameter of the most radially outwardly-disposed balls is the smallest.

## Claims

1. A rolling bearing comprising:
an inner ring including a first raceway at an outer periphery thereof;
an outer ring including a second raceway at an inner periphery thereof;
at least one intermediate ring which is interposed between the inner and outer rings, and includes a third raceway at an inner periphery thereof and a fourth raceway at an outer periphery thereof; and
a plurality of rolling elements rollably interposed between the third raceway of the intermediate ring and the raceway opposed thereto and between the fourth raceway of the intermediate ring and the raceway opposed thereto,
wherein the intermediate ring includes a larger-diameter ring portion, and a smaller-diameter ring portion formed on the larger-diameter ring portion through an inclined ring portion inclined relative to an axis, the smaller-diameter ring portion being smaller in diameter than the larger-diameter ring portion; and
wherein the third raceway is formed at a boundary portion between the larger-diameter ring portion and the inclined ring portion, and the fourth raceway is formed at a boundary portion between the smaller-diameter ring portion and the inclined ring portion.

2. The rolling bearing according to claim 1, wherein the pair of opposed raceways are disposed in angular contact with the rolling elements disposed therebetween.

3. The rolling bearing according to claim 1 or claim 2, wherein a pitch diameter of the rolling elements contacting the fourth raceway of the intermediate ring is larger than a pitch diameter of the rolling elements contacting the third raceway of the intermediate ring.

4. The rolling bearing according to any one of claims 1 to 3, wherein at the intermediate ring, a raceway diameter of the fourth raceway is smaller than a raceway diameter of the third raceway.

5. A supercharger comprising a housing, and a turbine shaft supported within the housing through a rolling bearing and having a turbine at one end portion thereof, wherein the rolling bearing is a rolling bearing according to any one of claims 1 to 4.

6. A rolling bearing comprising:
an inner ring including a first raceway at an outer periphery thereof;
an outer ring including a second raceway at an inner periphery thereof;
at least one intermediate ring which is interposed between the inner and outer rings, and includes a third raceway at an inner periphery thereof and a fourth raceway at an outer periphery thereof;
a plurality of first balls rollably interposed between the third raceway of the intermediate ring and the raceway opposed thereto; and
a plurality of second balls rollably interposed between the fourth raceway of the intermediate ring and the raceway opposed thereto; and
a diameter of the second balls is smaller than a diameter of the first balls.

7. The rolling bearing according to claim 6, wherein
the intermediate ring includes a larger-diameter ring portion, and a smaller-diameter ring portion formed on the larger-diameter ring portion through an inclined ring potion inclined relative to an axis, the smaller-diameter ring portion being smaller in diameter than the larger-diameter ring portion; and
the third raceway is formed at a boundary portion between the larger-diameter ring portion and the inclined ring portion, and the fourth raceway is formed at a boundary portion between the smaller-diameter ring portion and the inclined ring portion.

8. The rolling bearing according to claim 6 or claim 7, wherein the pair of opposed raceways are disposed in angular contact with the balls disposed therebetween.

9. The rolling bearing according to any one of claims 6 to 8, wherein at the intermediate ring, a raceway diameter of the fourth raceway is smaller than a raceway diameter of the third raceway.

10. A supercharger comprising a housing, and a turbine shaft supported within the housing through a rolling bearing and having a turbine at one end portion thereof, wherein the rolling bearing is a rolling bearing according to any one of claims 6 to 9.
